# EUROPEAN PATENT APPLICATION

(11) **EP 2 876 761 A1**
(43) Date of publication of application: **27.05.2015**
(21) Application number: 13819367.7
(22) Date of filing: 18.07.2013
(51) Int. Cl.: H02G 11/00, B60R 16/02

(54) **POWER SUPPLY STRUCTURE FOR SLIDING DOOR**

(30) Priority: 20.07.2012 JP 2012161315
(71) Applicant: Yazaki Corporation, Minato-ku Tokyo 108-8333 (JP)
(72) Inventor: TERADA, Tomoyasu, Makinohara-shi, Shizuoka 421-0407 (JP); SEKINO, Tsukasa, Makinohara-shi, Shizuoka 421-0407 (JP); YAMASHITA, Hiroshi, Makinohara-shi, Shizuoka 421-0407 (JP); OKAMOTO, Daisuke, Makinohara-shi, Shizuoka 421-0407 (JP)
(74) Representative: Grünecker Patent- und Rechtsanwälte PartG mbB
(86) International application number: PCT/JP2013/069484
(87) International publication number: WO 2014/014047

(57) **Abstract**

A sliding-door power feeding structure is provided which achieves minimized manufacturing costs, small size, and light weight. The sliding-door power feeding structure includes a second end retainer (3) provided between a door panel (P) and a door trim (T) and configured to retain a second end of an electric wire (W), the second end retainer (3) including a base (31) fixed to one of the door panel (P) and the door trim (T), a turnable arm (32) turnably supported on the base (31) and having an end configured to retain the electric wire W, and biasing part for biasing the turnable arm (32) in a direction to absorb a surplus length of the electric wire W, wherein the door trim (T) has a lower edge (11) including an electric wire guiding portion (12), the electric wire guiding portion (12) including a first bend (12A) bent to the outboard side and a second bend (12B) bent at an end of the first bend (12A) downward and to the inboard side.

## Description

### Technical Field

The present invention relates to a sliding-door power feeding structure for routing an electric wire between a vehicle body and a sliding door to feed power.

### Background Art

Sliding doors slidably supported on automotive vehicle bodies have been used, and electronic devices, such as a door lock switch, a window glass opening/closing switch, and a courtesy lamp, are mounted on the sliding doors. To connect such electronic devices mounted on a sliding door to an electronic device, such as a control unit, located on a body, a vehicle equipped with the sliding door is provided with a power feeding device to route electric wires (wiring harness) between the vehicle body and the sliding door for power feeding. One type of such power feeding device includes a box-shaped protector fixed to a door panel and a plate spring placed inside the protector to bias an electric wire in a direction to absorb a surplus length of the electric wire (see Patent Literature 1, for example).

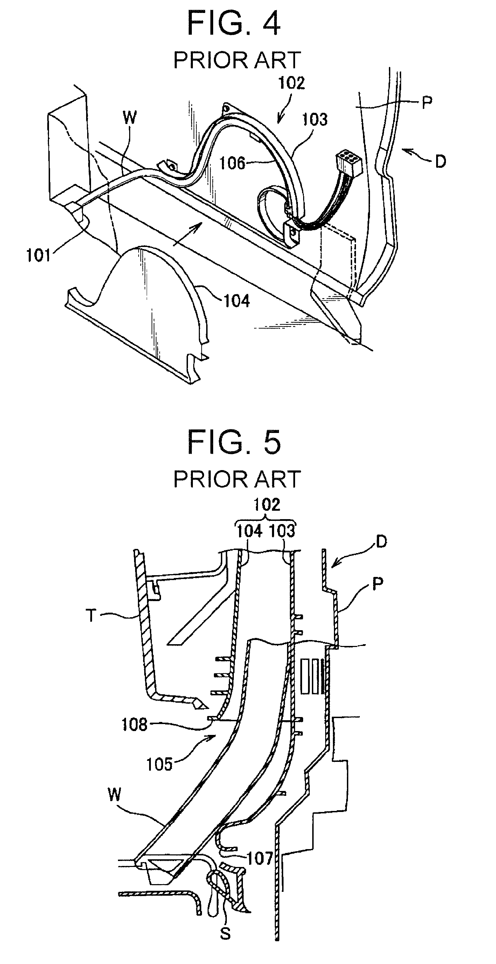

As illustrated in Figs. 4 and 5, a power feeding structure for a sliding door described in Patent Literature 1 includes a harness retainer 101 provided on a vehicle body and a protector 102 provided inside a sliding door D. One end of a wiring harness W is retained by the harness retainer 101 and the other end of the wiring harness W is routed through the protector 102 and then inside the sliding door D. The protector 102 includes a protector base 103 fixed to a door panel P, and a protector cover 104 attached to the protector base 103 at the inboard side, and allows the wiring harness W to pass through an oblong lower opening 105 located at the bottom of the protector 102 toward the vehicle body. A plate spring 106 is provided inside the protector 102 to bias the wiring harness W in a direction to absorb a surplus length, which is induced in the wiring harness W when the sliding door D is half disclosed, and thereby prevent the wiring harness W from sagging, i.e., the plate spring 106 is provided to bias the wiring harness W upward inside the protector 102 illustrated in Fig. 4.

### Citation List

### Patent Literature

Patent Literature 1: JP 2009-273312 A

### Summary of Invention

### Technical Problem

As illustrated in Fig. 5, in the traditional power feeding structure as described in Patent Literature 1, the protector base 103 of the protector 102 has a lower edge 107 that is bent along the contour of the door panel P toward the vehicle body (to the left in the figure), and the protector cover 104 has a lower edge 108 that is bent toward the vehicle body and overlaps the lower edge of a door trim T. A gap between the lower edges 107 and 108 constitutes the lower opening 105. The protector 102 in the traditional power feeding structure as described above allows the bent lower edges 107 and 108 to guide the wiring harness W from the lower opening 105 toward the vehicle body and thereby prevents an interference of the wiring harness W with the door panel P or a weather strip S on the vehicle body. However, the protector base 103 and the protector cover 104 extending downward beyond the lower edge of the door trim T as in the traditional power feeding structure results in a large size of the protector 102, reducing the internal space of the sliding door D, increasing the weight of the power feeding device, and increasing the manufacturing costs.

It is therefore an object of the invention to provide a sliding-door power feeding structure that is small in size and light in weight and achieves minimized manufacturing costs.

### Solution to Problem

To achieve the object described above, a sliding-door power feeding structure according to one aspect is A sliding-door power feeding structure for routing an electric wire between a vehicle body and a sliding door to feed power, the structure comprising: a door panel at an outboard side and a door trim at an inboard side, the door panel and the door trim composing the sliding door; a first end retainer provided on the vehicle body and configured to retain a first end of the electric wire; and a second end retainer provided between the door panel and the door trim and configured to retain a second end of the electric wire, the second end retainer including a base fixed to one of the door panel and the door trim, a turnable arm turnably supported on the base so as to retain the electric wire at an end thereof, and biasing part for biasing the turnable arm in a direction to absorb a surplus length of the electric wire, wherein at a lower edge of the door trim an electric wire guiding portion including a first bend bent to the outboard side, and a second bend bent from an end of the first bend downward and to the inboard side.

Preferably, the lower edge of the door trim is positioned above a lower edge of the door panel.

Preferably, the base of the second end retainer is provided above the lower edge of the door trim, and the end of the turnable arm is, with its being turned downward, located at a substantially same height with the lower edge of the door trim.

### Advantageous Effects of Invention

In an aspect of the invention according to the one aspect, the lower edge of the door trim includes an electric wire guiding portion that includes a first bend bent to the outboard side and a second bend bent at the end of the first bend downward and to the inboard side. Thus, when the sliding door is, for example, in a half open condition and the electric wire, having a sag, is routed to the first end retainer provided on the vehicle body, the electric wire guiding portion is capable of guiding the electric wire smoothly toward the vehicle body, mitigating stress on the electric wire. The electric wire guiding portion provided in the door trim is capable of guiding the electric wire as described above, and thus, unlike the traditional technique, which includes a protector and a protector cover required to have bent lower edges extending downward beyond the lower edge of the door trim, a protector cover can be eliminated from the second end retainer. This reduces the base of the second end retainer in size and weight, and, consequently, manufacturing costs for the second end retainer can be minimized, and reduction of the internal space of the sliding door can be precluded, allowing for effective use of the space.

In another aspect of the invention, the lower edge of the door trim is provided above the lower edge of the door panel. Thus, when the sliding door is, for example, in the half open condition and the electric wire, having a sag, is guided toward the vehicle body by the electric wire guiding portion in the lower edge of the door trim, the electric wire is allowed to be covered by the door panel as observed from the outboard side, not being exposing to an area below the lower edge of the door panel.

In still another aspect of the invention, the base of the second end retainer is provided above the lower edge of the door trim, so that the end of the turnable arm is located at a substantially same height with the lower edge of the door trim when the turnable arm has turned downward. Thus, the position of the turning axis of the base is above the lower edge of the door trim approximately by the turning radius of the turnable arm. Unlike the traditional protector, which is required to include the protector cover extending downward over a distance at least larger than its turning radius, a protector cover can be eliminated from the second end retainer according to the invention, achieving a significant reduction in weight. Additionally, the end of the turnable arm turned downward is located at a substantially same height with the lower edge of the door trim, i.e. the electric wire guiding portion. In this way, it is possible to prevent the electric wire retained by the end of the turnable arm from considerably moving away from the electric wire guiding portion and thereby from flapping.

### Brief Description of Drawings

Fig. 1 is a side viewof a sliding-doorpower feeding structure according to an embodiment of the invention.
Fig. 2 is a side view of effects of the sliding-door power feeding structure.
Fig. 3A is a sectional view of effects of the sliding-door power feeding structure.
Fig. 3B is a sectional view of effects of the sliding-door power feeding structure.
Fig. 4 is an exploded perspective view of a sliding-door power feeding structure according to a traditional technique.
Fig. 5 is a sectional view of the sliding-door power feeding structure according to the traditional technique.

### Description of Embodiments

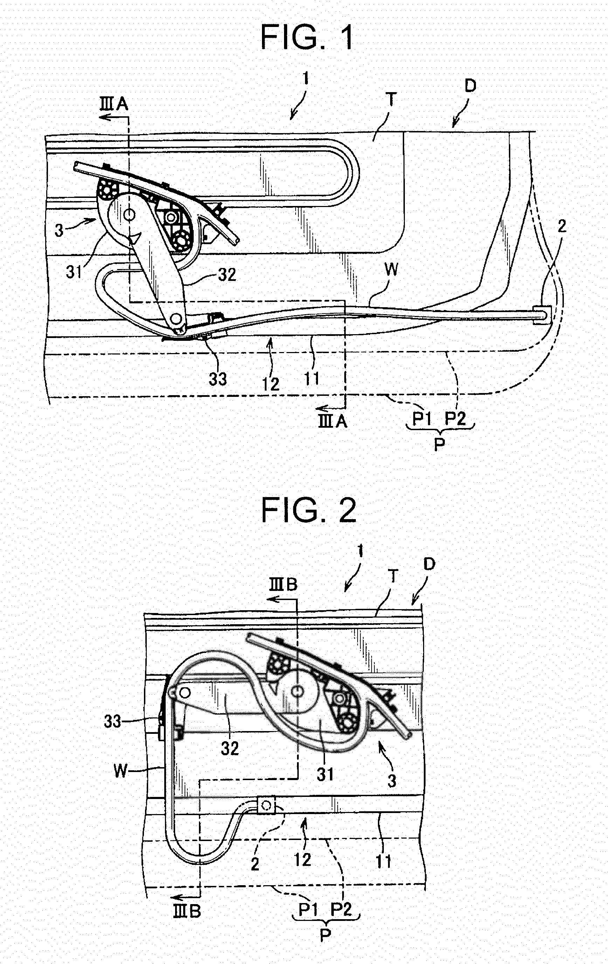

A sliding-door power feeding structure according to an embodiment of the invention will now be described with reference to Figs. 1 to 3B.

A sliding-door power feeding structure 1 according to the embodiment is, for example, for routing an electric wire W between a vehicle body and a sliding door D to connect an electronic device provided on the vehicle body to an electronic device attached on the sliding door D and for feeding power to the electronic device provided on the sliding door D. The sliding door D includes a door panel P, including a metal door outer panel P1 and a metal door inner panel P2, and a door trim T, made of synthetic resin and facing the inboard side of the door inner panel P2. The electric wire W includes a wiring harness, including a plurality of electric wires with a connector attached on the ends of the wires, and a wrapping material (a corrugated tube, for example) that covers the wiring harness for protection.

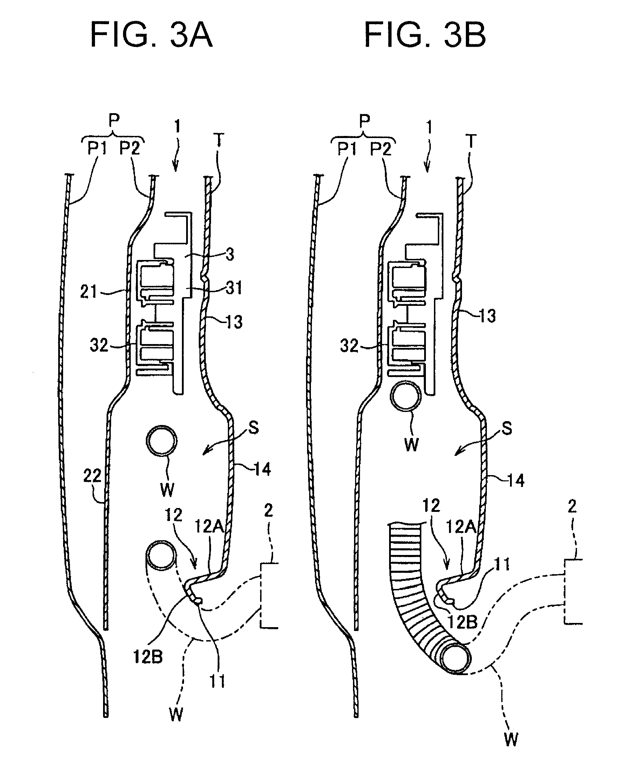

The sliding-door power feeding structure 1 includes a first end retainer 2 provided on the vehicle body and retaining a first end of the electric wire W, and a second end retainer 3 provided between the door panel P and the door trim T and retaining a second end of the electric wire W. Figs. 1 and 2 are side views of the sliding door D observed from outside the vehicle, providing views, through the door panel P, of a side of the door trim T at the outboard side and the second end retainer 3. Additionally, Fig. 1 is a diagram of the sliding door D in a fully closed condition, with the front of a vehicle toward the left and the rear of the vehicle toward the right of Fig. 1. The sliding door D is slid from the fully closed condition toward the right of the figure (toward the rear of the vehicle) to be opened. Fig. 2 is a diagram of the sliding door D in a half open condition. Fig. 3A is a sectional view along a view line IIIA in Fig. 1, and Fig. 3B is a sectional view along a view line IIIB in Fig. 2.

The first end retainer 2, which is provided on the vehicle body near a floor, retains the first end of the electric wire W swingably and permits the electric wire W to pass therethrough to an electronic device, such as a control unit. The first end retainer 2 may include an outer component fixed to the vehicle body and an inner component rotatably supported on the outer component, so that the electric wire W is retained by the inner component and allowed to pass through the outer component to be connected to the control unit or the like.

The second end retainer 3 includes a base 31 fixed to the door inner panel P2, a turnable arm 32 turnably supported on the base 31, an end retainer 33 provided at an end of the turnable arm 32 to retain the electric wire W, and a helical torsion spring (not shown) housed in a shaft portion of the turnable arm 32 to serve as biasing part for biasing the turnable arm 32 with respect to the base 31. The helical torsion spring biases the turnable arm 32 clockwise in Figs. 1 and 2. Thus, when the sliding door D is in the fully closed condition illustrated in Fig. 1, the turnable arm 32 is biased clockwise by the helical torsion spring, applying tension to the electric wire W. When the sliding door D is in the half open condition illustrated in Fig. 2 and the tension is reduced as the electric wire W starts to sag, the helical torsion spring enables the turnable arm 32 to turn clockwise, raising the electric wire W. As described above, the second end retainer 3 allows the helical torsion spring to bias the turnable arm 32 to absorb a surplus length of the electric wire W and thereby prevent the electric wire W from sagging.

The base 31 is provided between the door inner panel P2 and the door trim T and fixed above a lower edge 11 of the door trim T, so that the end of the turnable arm 32 is located at a substantially same height with the lower edge 11 of the door trim T when the turnable arm 32 has turned downward with respect to the base 31, i. e. , in the fully closed condition. As described above, the second end retainer 3 includes no covering or the like, which would extend toward the lower edge 11 of the door trim T, for the base 31 and allows merely the turnable arm 32 to approach the lower edge 11 of the door trim T in the fully closed condition. As illustrated in Figs. 1 and 3A, when the sliding door D is fully closed, the electric wire W retained by the second end retainer 3 extends from the end retainer 33, provided on the turnable arm 32 that has turned downward, toward the rear along the lower edge 11 of the door trim T and under the bottom of the lower edge 11 so as to be connected to the first end retainer 2 at the inboard side.

As illustrated in Figs. 2 and 3B, when the sliding door D is half opened, the electric wire W is raised by the turnable arm 32, which has turned upward due to an biasing force by the helical torsion spring, so that the first end side of the wire, which has slackened, extends under the lower edge 11 of the door trim T. When the sliding door D is half opened as described above, the sliding door D moves away from the vehicle body as it is slid toward the rear of the vehicle body. Thus, any slack that may be generated in the electric wire W does not result in protrusion of a lower portion of the electric wire W below the lower edge of the door panel P, causing no exposure of the electric wire W to the exterior of the vehicle. As the sliding door D is further slid in a direction to be fully opened, the end of the turnable arm 32 travels to a position farther toward the rear of the body beyond the first end retainer 2, and thus, the surplus length of the electric wire W is reduced to take up the slack. When the sliding door D is fully open, the electric wire W is raised by the turnable arm 32, which has turned somewhat downward, and extends under the lower edge 11 of the sliding door D at a position toward the front of the vehicle beyond the end of the turnable arm 32 so as to be connected to the first end retainer 2.

In the sliding door D provided with the second end retainer 3 as described above, the door trim T at the lower edge 11 has an electric wire guiding portion 12 including a first bend 12A and a second bend 12B. As illustrated in Figs. 3A and 3B, the first bend 12A is bent toward the outboard side (to the left in Figs. 3A and 3B, i.e. to the side that approaches the door inner panel P2), and the second bend 12B is bent at the end of the first bend 12A downward and to the inboard side. As described above, the electric wire guiding portion 12 serves the functions of mitigating friction resistance with the electric wire W and of preventing the electric wire W from being pulled to the inboard side when the electric wire W extending from the end of the turnable arm 32 of the second end retainer 3 to the first end retainer 2 may come into contact with the lower edge 11 of the door trim T, at each positon that the sliding door D is from the fully closed to the half open, and to the fully open positions. Namely, if the electric wire W, which is connected to the first end retainer 2, catches on something, a force enough to twist the turnable arm 32 to the inboard side may be generated through the electric wire W, possibly causing damage to the second end retainer 3. Thus, the bent portions of the first bend 12A and the second bend 12B at the end of the electric wire guiding portion 12 have smooth bent surfaces and are positioned laterally below the electric wire W at the inboard side of the electric wire W which is retained by the end retainer 33 of the second end retainer 3.

The sliding door D has dimensions between the door inner panel P2 and the door trim T larger at positions in a height range from a lower portion of the base 31 to an upper portion of the electric wire guiding portion 12 than those at positions at which the base 31 of the second end retainer 3 is attached. In other words, the door inner panel P2 has a fixing surface portion 21, to which the second end retainer 3 is fixed, and a downward extending surface portion 22, which is bent to the outboard side beyond the fixing surface portion 21 and extends downward. The door trim T has an opposite surface portion 13, opposite to the inboard side of the fixing surface portion 21 of the door inner panel P2, and a bulging surface portion 14, which is bent to the inboard side beyond the opposite surface portion 13 and extends downward. The electric wire guiding portion 12 is formed continuously at the lower edge of the bulging surface portion 14. This results in an enlarged space S with enlarged widths between the downward extending surface portion 22 of the door inner panel P2 and the bulging surface portion 14 of the door trim T, and the enlarged space S accommodates the electric wire W to absorb the surplus length of the electric wire W as described above.

According to the embodiment as described above, the electric wire guiding portion 12, provided at the lower edge 11 of the door trim T, guides the electric wire W, allowing the electric wire W to be guided toward the first end retainer 2 smoothly whichever position the sliding door D is from the fully closed to the fully open positions, and thereby mitigating stress on the electric wire W. Thus, unlike the traditional protector, the necessity of extending the bent lower edge of the protector cover downward beyond the lower edge of the door trim is precluded, and the base 31 of the second end retainer 3 can be reduced in size and weight, leading to minimized manufacturing costs of the second end retainer 3. In addition to the reduction in size of the base 31 of the second end retainer 3, the enlarged space S is formed between the downward extending surface portion 22 of the door inner panel P2 and the bulging surface portion 14 of the door trim T, achieving an enlarged internal space of the sliding door D and thereby securing a wide area for movement of the electric wire W, the surplus length of which is absorbed as the sliding door D is opened and closed. Thus, the electric wire W is less prone to catching, and breakage of the electric wire W and damage to the first end retainer 2 and the second end retainer 3 can be prevented accordingly.

It should be noted that the embodiment described above is presented merely as a representative example of the invention and is not intended to limit the invention. It is therefore possible to make various modifications without departing from the spirit of the invention.

For example, although the base 31 of the second end retainer 3 of the sliding-door power feeding structure 1 is fixed to the door inner panel P2 of the sliding door D in this embodiment, the base 31 may be fixed to the door trim T. Additionally, the turnable arm 32 turns downward with a maximum biasing force from the biasing part (the helical torsion spring) applied to the turnable arm 32 when the sliding door D is fully closed in this embodiment. This is not limiting, and the turnable arm 32 may turn counter to the biasing force from the biasing part when the sliding door D is fully open. In other words, the sliding door D may be fully open with the second end retainer 3 in the condition illustrated in Fig. 1.

### Reference Signs List

- 1: Sliding-door power feeding structure
- 2: First end retainer
- 3: Second end retainer
- 11: Lower edge
- 12: Electric wire guiding portion
- 12A: First bend
- 12B: Second bend
- 31: Base
- 32: Turnable arm
- D: Sliding door
- P: Door panel
- T: Door trim
- W: Electric wire

## Claims

1. A sliding-door power feeding structure for routing an electric wire between a vehicle body and a sliding door to feed power, the structure comprising:
a door panel at an outboard side and a door trim at an inboard side, the door panel and the door trim composing the sliding door;
a first end retainer provided on the vehicle body and configured to retain a first end of the electric wire; and
a second end retainer provided between the door panel and the door trim and configured to retain a second end of the electric wire,
wherein the second end retainer including
a base fixed to one of the door panel and the door trim,
a turnable arm turnably supported on the base so as to retain the electric wire at an end thereof, and
biasing part for biasing the turnable arm in a direction to absorb a surplus length of the electric wire, and wherein at a lower edge of the door trim an electric wire guiding portion including a first bend bent to the outboard side, and a second bend bent from an end of the first bend downward and to the inboard side.

2. The sliding-door power feeding structure according to claim 1, wherein the lower edge of the door trim is positioned above a lower edge of the door panel.

3. The sliding-door power feeding structure according to claim 1 or 2, wherein the base of the second end retainer is provided above the lower edge of the door trim, and wherein the end of the turnable arm is, with its being turned downward, located at a substantially same height with the lower edge of the door trim.
